# FASCICULE DE BREVET EUROPEEN

(11) **EP 1 699 613 B1**
(45) Date de publication et mention de la délivrance du brevet: **20.08.2008**
(21) Numéro de dépôt: 04821079.3
(22) Date de dépôt: 19.11.2004
(51) Int. Cl.: B29C 49/68

(54) **MODULE DE CHAUFFAGE D'UNE PREFORME EQUIPE D'UN DEFLECTEUR D'AIR PROFILE DE FACON AERODYNAMIQUE ET FOUR COMPORTANT AU MOINS UN TEL MODULE**
MIT EINER AERODYNAMISCH PROFILIERTEN LUFTLEITPLATTE AUSGESTATTETES VORFORMLINGERWÄRMUNGSMODUL UND MINDESTENS EIN SOLCHES MODUL UMFASSENDER OFEN
PREFORM HEATING MODULE EQUIPPED WITH AN AERODYNAMICALLY PROFILED AIR BAFFLE AND OVEN COMPRISING AT LEAST ONE SUCH MODULE

(30) Priorité: 19.12.2003 FR 0351121
(43) Date de publication de la demande: 13.09.2006
(73) Titulaire: SIDEL PARTICIPATIONS, 76930 Octeville-sur-Mer (FR)
(72) Inventeur: DOUDEMENT, Christophe, Sidel, F-76930 Octeville Sur Mer (FR)
(74) Mandataire: Kohn, Philippe
(86) Numéro de dépôt international: PCT/EP2004/053017
(87) Numéro de publication internationale: WO 2005/068161

(56) Documents cités:
- US-A- 5 322 651
- US-A- 5 980 229
- US-B1- 6 632 087

## Description

L'invention concerne un module perfectionné de chauffage de préformes, notamment pour des préformes de récipient en plastique, et un four de chauffage de préformes comportant au moins un tel module.

L'invention concerne plus particulièrement un Module de chauffage pour une préforme, notamment pour une préforme de récipient en plastique, qui comporte un tunnel longitudinal de chauffage qui est délimité transversalement par les faces internes verticales longitudinales parallèles entre elles de deux parois, une première paroi chauffante étant équipée d'un système de chauffage, l'autre paroi aérée comportant des orifices d'aération destinés à laisser passer transversalement l'air soufflé par au moins une soufflerie depuis l'amont, à l'extérieur du tunnel de chauffage, vers l'aval, à l'intérieur, et dans lequel une première partie de la préforme est chauffée dans le tunnel de chauffage, tandis que la seconde partie de la préforme est maintenue à l'extérieur du tunnel de chauffage à travers une ouverture longitudinale ménagée entre les bords longitudinaux des parois du tunnel de chauffage, du type dans lequel la soufflerie comporte un déflecteur longitudinal qui dévie une partie de l'air soufflé transversalement vers la seconde partie de la préforme afin d'éviter que la matière constitutive de ladite partie inférieure ne s'échauffe jusqu'à sa température d'amollissement.

La fabrication de récipients, et notamment de bouteilles, en plastique, par exemple en polyéthylène téréphtalate (PET), est généralement réalisée à partir de préformes préalablement injectées qui sont conformées en bouteille par une opération de soufflage, ou d'étirage-soufflage de leur corps et de leur fond. Les préformes ont généralement une forme d'éprouvette dont le col a déjà la forme définitive du goulot de la bouteille. Le col comporte par exemple un filetage destiné à recevoir un bouchon à vis.

Avant de réaliser l'opération de soufflage, il est nécessaire de réchauffer une première partie des préformes comprenant le corps et le fond à une température supérieure à la température de transition vitreuse dans un four de chauffage afin d'en ramollir la matière plastique constitutive.

A cet effet, on connaît déjà des fours de chauffage pour préformes du type qui comporte un tunnel longitudinal de chauffage. La préforme froide est transportée par un dispositif de transport depuis une première extrémité du tunnel, puis elle circule le long du tunnel dans lequel la première partie de la préforme comprenant le corps et le fond est chauffée avant de ressortir par la seconde extrémité du tunnel. La préforme ainsi réchauffée est prête pour l'opération de soufflage.

Le four de chauffage peut comporter un ou plusieurs modules ou unités de chauffage qui comportent chacun une portion de tunnel et qui sont alignés les uns à la suite des autres de manière à former un tunnel unique de grande longueur. Dans la suite de la description, on assimilera le terme module de chauffage au terme four.

Pour assurer le chauffage en profondeur du fond et de la paroi cylindrique du corps de la préforme sur toute sa périphérie, les préformes sont généralement mises en rotation sur elles-mêmes pendant leur circulation dans le four. Par ailleurs, une paroi du tunnel est équipée de moyens de chauffage à rayonnement tandis que l'autre paroi est munie d'orifices d'aération pour permettre le passage d'air soufflé afin de favoriser un chauffage homogène dans toute l'épaisseur de la paroi cylindrique du corps de la préforme sans surchauffer la couche de matière superficielle formant face externe de la paroi cylindrique de la préforme. L'air soufflé permet d'évacuer la chaleur de convection provoquée par les moyens de chauffage pour favoriser la pénétration du rayonnement qu'ils engendrent dans l'épaisseur de la matière constituant le corps.

Cependant, une seconde partie de la préforme comprenant le col, qui est conformé à sa forme et à ses dimensions définitives lors de la fabrication, généralement par injection de la préforme, ne doit pas être déformée lors des opérations de chauffage et/ou de soufflage. Il est donc essentiel de maintenir cette seconde partie à une température inférieure à la température de transition vitreuse ou température d'amollissement. A cet effet, le col de la préforme est maintenu à l'extérieur du tunnel à travers une ouverture du tunnel qui forme une rainure longitudinale.

Afin d'empêcher que la chaleur du tunnel de chauffage ne soit communiquée à cette seconde partie de la préforme, cette dernière est refroidie par de l'air soufflé par une soufflerie.

De préférence, dans de nombreuses installations, les préformes sont disposées le col en bas durant au moins une partie de leur chauffage. Ceci permet d'éviter ou de limiter un réchauffage du col par des mouvements ascendant de convection de l'air chaud.

Il est connu d'équiper les modules de chauffage d'une soufflerie unique qui permet d'une part le passage d'air soufflé dans le tunnel de chauffage, et d'autre part le refroidissement du col de la préforme. La soufflerie est alors équipée d'un déflecteur qui est situé en amont du tunnel et de la préforme par rapport au sens d'écoulement de l'air. Le déflecteur permet ainsi de dévier vers le col de la préforme une partie du flux d'air soufflé.

Un tel module de chauffage est par exemple divulgué dans les documents US-A-6.632.087 et US-A-5.980.229.

La présente invention vise à améliorer l'efficacité du refroidissement du col de la préforme lors de l'opération de chauffage. A cette fin, l'invention propose un module de chauffage du type décrit précédemment, selon la partie caractérisante de la revendication 1.

Selon d'autres caractéristiques de l'invention :
- le déflecteur est un écran thermique qui empêche la communication de la chaleur produite par le système de chauffage à la seconde partie de la préforme, à travers l'ouverture du tunnel de chauffage ;
- le déflecteur comporte un système de climatisation ;
- l'extrémité aval du déflecteur est montée pivotante autour d'un axe longitudinal afin de réguler le flux d'air qui soufflé vers la paroi aérée ;
- l'ouverture est ménagé entre les bords longitudinaux inférieurs des parois du tunnel de chauffage, et en ce que la soufflerie comporte un volet inférieur de sortie d'air qui est agencé sous le déflecteur et dont l'extrémité amont est montée pivotante autour d'un axe longitudinal de façon à guider l'air jusqu'à la seconde partie de la préforme, au-dessous de l'ouverture longitudinale ménagée entre les bords longitudinaux inférieurs des parois du tunnel de chauffage ;
- l'ouverture est ménagé entre les bords longitudinaux supérieurs des parois du tunnel de chauffage, et en ce que la soufflerie comporte un volet supérieur de sortie d'air qui est agencé au-dessus du déflecteur et dont l'extrémité amont est montée pivotante autour d'un axe longitudinal de façon à guider l'air jusqu'à la seconde partie de la préforme, au-dessus de l'ouverture longitudinale ménagée entre les bords longitudinaux supérieurs des parois du tunnel de chauffage.

L'invention concerne aussi un four de chauffage pour une préforme qui comporte une pluralité de modules de chauffage selon l'invention qui sont alignés de façon à former un tunnel.

D'autres caractéristiques et avantages de l'invention apparaîtront au cours de la lecture de la description détaillée qui suit, pour la compréhension de laquelle on se reportera aux dessins en annexe parmi lesquels :
- la figure 1 est une vue de profil qui représente une préforme destinée à être chauffée dans un four avant d'être transformée en bouteille après une opération de soufflage ;
- la figure 2 est une vue de profil qui représente un four pour chauffer la préforme de la figure 1 qui est réalisé selon les enseignements de l'invention, et qui permet de chauffer des préformes avec leur col en bas ;
- la figure 3 est une vue en section transversale selon le plan de coupe 3-3 de la figure 2 qui représente le four équipé d'une soufflerie et d'un déflecteur pour orienter l'air soufflé.

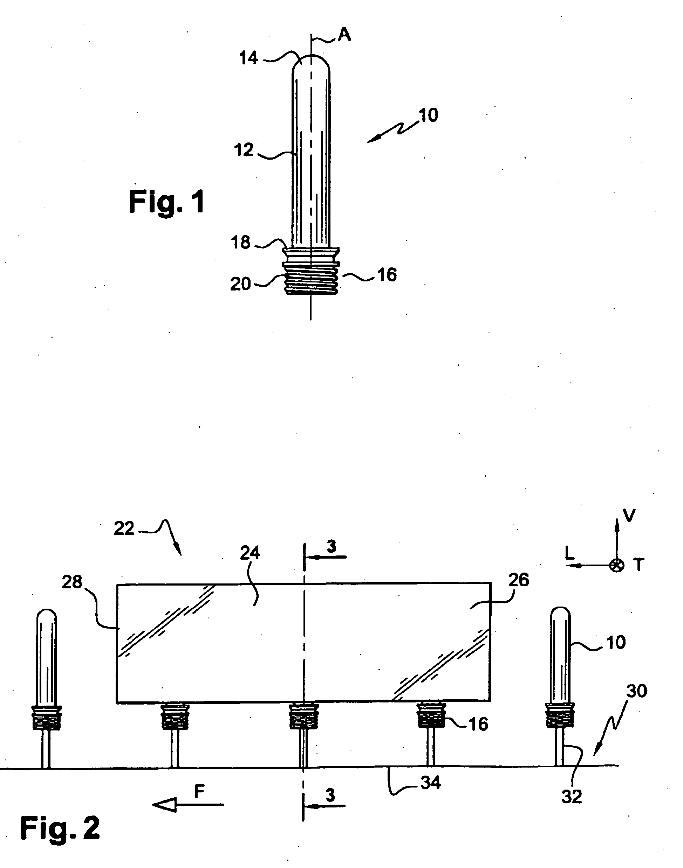

On adoptera dans la suite de la description, à titre non limitatif, une orientation longitudinale, verticale et transversale indiquée par le trièdre L, V, T de la figure 2.

Dans la suite de la description, on utilisera une orientation d'amont vers l'aval pour décrire l'écoulement des flux de fluides.

On a représenté à la figure 1 une préforme 10 qui est constituée d'un matériau plastique, tel que du polyéthylène téréphtalate (PET), et qui est destinée à être transformée en un récipient, tel une bouteille, après une première opération de chauffage pour ramollir le plastique, puis une seconde opération de soufflage ou d'étirage-soufflage, pour conformer la préforme 10 en récipient.

De façon connue, la préforme 10 a une forme d'éprouvette ou de tube à essai d'axe vertical A. Comme représentée à la figure 1, le corps tubulaire 12 de la préforme 10 est fermé à son extrémité supérieure par un fond hémisphérique 14 tandis que son extrémité inférieure comporte un col 16 qui forme le goulot du récipient définitif.

Puisque le col 16 a déjà la forme définitive du goulot du récipient définitif, seuls le corps tubulaire 12 et son fond 14 doivent être déformés par soufflage pour obtenir un récipient fini. Lors de l'opération de chauffage, il est donc important de ne réchauffer que le corps tubulaire 12 et le fond 14 de la préforme 10 au-delà de la température de transition vitreuse de la matière constitutive, tout en maintenant la température du col 16 en deçà de la température de transition vitreuse.

La jonction entre le corps tubulaire 12 et le col 16 est délimitée par une collerette 18. La face cylindrique externe 20 du col comporte ici un pas de vis qui est destiné à recevoir un bouchon fileté (non représenté) afin de fermer la bouteille.

On a représenté à la figure 2 un four 22 pour chauffer des préformes 10 durant l'opération de chauffage. Le four 22 comporte ici un tunnel longitudinal de chauffage 24 à l'intérieur duquel les préformes 10 sont destinées à être déplacées selon le sens indiqué par la flèche F. Le tunnel 24 comporte une première extrémité 26 d'entrée des préformes 10, à droite selon la figure 2, et une seconde extrémité 28 de sortie des préformes 10, à gauche selon la figure 2.

Comme illustré à la figure 2, le four 22 comporte un dispositif 30 de transport des préformes 10 depuis l'entrée 26 jusqu'à la sortie 28 du tunnel 24. Le dispositif de transport 30 comporte un train de mandrins 32 de préhension de préformes 10. Les mandrins 32 sont disposés verticalement au-dessus d'un rail inférieur 34 qui s'étend sous le tunnel 24 de manière parallèle à ce dernier. Les mandrins 32 sont destinés à maintenir verticalement les préformes 10 durant leur parcours le long du tunnel 24.

De façon connue, chaque mandrin 32 s'étend verticalement et comporte des moyens de maintien à force des préformes, non représentés, tels que des rondelles élastiques, qui sont susceptibles d'être enserrés de façon solidaire par la face cylindrique interne du col 16 lorsque le mandrin 32 est introduit dans le col 16.

La forme longitudinale rectiligne du tunnel 24 tel que représentée à la figure 2 est donnée à titre d'exemple non limitatif. L'invention est bien entendu applicable à des fours du type circulaire, ou encore du type « chenille » qui comportent une partie dans laquelle les préformes 10 sont réchauffées col en haut et une autre partie dans laquelle les préformes sont réchauffées col en bas. Ces derniers types de fours équipent certaines machines de la demanderesse.

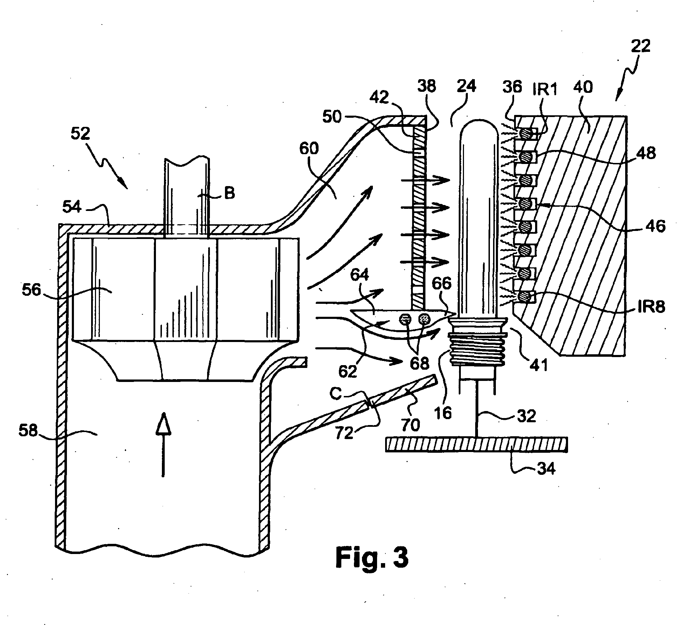

On a représenté à la figure 3 une section du tunnel 24. Il est délimité transversalement par deux faces internes 36 et 38 longitudinales verticales parallèles entre elles qui appartiennent respectivement à une première paroi 40, située à droite à la figure 3, et à une seconde paroi 42, située à gauche.

Le tunnel 24 n'est ici fermé ni vers le haut ni vers le bas. Ainsi, les bords longitudinaux inférieurs des faces internes 36 et 38 délimitent une ouverture inférieure 41 en forme de rainure longitudinale.

La première paroi 40 est équipée d'un dispositif de chauffage 46 du tunnel 24. Dans l'exemple représenté à la figure 3, le dispositif de chauffage 46 comporte huit lampes à infrarouges qui sont ici référencées IR1 à IR8 et qui ont la forme de tubes longitudinaux disposés horizontalement les uns au-dessus des autres. Les lampes sont maintenues, par chacune de leurs extrémités, à proximité de la face interne 36 de la première paroi 40 à l'aide de moyens, ici des cannelures longitudinales 48 réparties verticalement qui sont chacune destinées à loger une extrémité des lampes IR1 à IR8.

La seconde paroi 42 comporte ici des orifices 50 qui traversent transversalement son épaisseur afin de permettre à un flux d'air de pénétrer à l'intérieur du tunnel 24. Comme expliqué en préambule, le flux d'air permet ainsi d'évacuer du tunnel 24 la chaleur de convection provoquée par le dispositif de chauffage 46 afin de favoriser la pénétration du rayonnement dans l'épaisseur de la matière constituant le corps de la paroi cylindrique de la préforme 10.

A cet effet, le four 22 est muni d'une soufflerie 52 qui comporte un ventilateur 54 du type centrifuge qui est agencé à l'extérieur du tunnel 24, à gauche de la seconde paroi 42 selon la figure 3.

Le ventilateur 54 comporte une roue à aubes 56 qui est montée rotative autour d'un axe vertical B qui est entraîné en rotation par exemple par un moteur (non représenté). Le ventilateur 54 est alimenté en air par une conduite d'entrée 58 verticale axiale qui s'étend sous le ventilateur 54. La roue 56 du ventilateur 54 refoule radialement un flux d'air dans une conduite 60 aval transversale de sortie ou de refoulement jusqu'à la seconde paroi 42.

Comme représenté à la figure 3, le corps tubulaire 12 et le fond 14 de la préforme 10 sont maintenus à l'intérieur du tunnel chauffant 24, tandis que le col 16 et la collerette 18 sont maintenus à l'extérieur juste au-dessous de l'ouverture inférieure 41 du tunnel 24.

Selon une variante connue, la préforme 10 est orientée col 16 vers le haut et l'ouverture longitudinale 41 est délimitée par les bords longitudinaux supérieurs des parois 36 et 38 du tunnel 24. Le col 16 de la préforme 10 est alors maintenu au-dessus du tunnel 24 à travers l'ouverture supérieure.

Afin de maintenir le col 16 à une température inférieure à sa température de transition vitreuse, un flux d'air frais est soufflé transversalement en direction du col 16 et de la collerette 18. Le flux d'air est produit par la soufflerie 52 unique qui alimente en air le tunnel 24. La conduite de sortie d'air 60 de la soufflerie 52 comporte donc un déflecteur 62 qui est destiné à dévier vers le col 16 une partie du flux d'air initialement soufflé en direction de la seconde paroi 42.

Le déflecteur 62 forme une rampe globalement longitudinale dont la section transversale est horizontale. Il est agencé perpendiculairement sous le bord inférieur longitudinal de la face interne 38 de la seconde paroi 42. Ainsi, une partie amont 64 du déflecteur 62 s'étend transversalement à l'intérieur de la conduite de sortie 60 de la soufflerie 52 de façon à diviser le flux d'air sortant en deux. La partie amont 64 du déflecteur 62 ne divise cependant pas la conduite de sortie 60 en deux compartiments sur toute sa longueur, mais seulement sur un tronçon aval de la conduite 60.

Une partie aval 66 du déflecteur 62 s'étend de façon transversale sous l'ouverture inférieure 41 du tunnel 24 jusqu'au col 16 de la préforme 10. L'extrémité aval 66 du déflecteur 62 affleure ainsi au col 16 juste au-dessus de la collerette 18.

Avantageusement, le déflecteur 62 forme aussi un écran qui empêche les rayons infrarouges émis par les lampes IR1 à IR8 d'atteindre le col 16.

Selon les enseignements de l'invention, la section transversale de la partie amont 64 du déflecteur 62 est profilée de façon aérodynamique de façon que le flux d'air qui est dévié par le déflecteur 62 en direction du col 16 et de la collerette 18, s'écoule de façon laminaire. Dans le mode de réalisation représenté à la figure 3, la partie centrale du déflecteur 62 présente une épaisseur qui s'affine jusqu'à former une pointe amont.

Avantageusement, la section transversale de la partie aval 66 du déflecteur 62 est aussi profilée de façon aérodynamique afin que l'écoulement de l'air soit laminaire et accéléré en direction du col 16 et de la collerette 18. La section transversale du déflecteur 62 est ainsi similaire à celle d'une aile d'avion ou à une moitié inférieure de goutte d'eau dont la pointe est orientée transversalement vers le col 16 et la collerette 18 de la préforme 10.

Avantageusement, le déflecteur 62 forme aussi un écran thermique qui empêche la propagation de la chaleur, par conduction ou par rayonnement, depuis l'intérieur du tunnel 24 jusqu'au col 16 et à la collerette 18. Le déflecteur 62 est ainsi refroidi par un système de climatisation qui comporte ici deux conduites longitudinales 68 formées dans l'épaisseur du déflecteur 62. Un fluide caloporteur, par exemple de l'eau, circule dans les conduites 68 afin d'évacuer la chaleur reçue par la face supérieure du déflecteur 62.

La conduite de sortie 60 comporte un volet inférieur 70 qui forme une paroi inférieure de la conduite de sortie 60. Une extrémité amont 72 du volet inférieur 70 est montée pivotante autour d'un axe longitudinal C. Le volet 70 est ainsi susceptible d'être orienté de manière à diriger le flux d'air sortant du ventilateur 54 vers le col 16 et la collerette 18, quelle que soit la dimension du col 16 et de la collerette 18. Ceci est un avantage qui permet ainsi d'optimiser la géométrie de la conduite de sortie 60 pour refroidir de façon optimale le col 16 et la collerette 18 de préformes 10 de dimensions variées.

Selon une variante non représentée de l'invention, la partie aval 66 du déflecteur 62 est montée pivotante autour d'un axe longitudinal de façon que la quantité d'air déviée vers le col 16 et vers la collerette 18 puisse être commandée en fonction de l'orientation angulaire du déflecteur 62.

Lors du fonctionnement du four 22, la préforme 10 qui est maintenue par le mandrin 32, est introduite dans le tunnel 24 par l'extrémité d'entrée 26. Elle est animée d'un mouvement de translation vers l'extrémité de sortie 28 du tunnel 24 et, simultanément, d'un mouvement de rotation autour de son axe vertical A afin que toute la périphérie de la préforme 10 soit chauffée par les lampes IR1 à IR8 agencées sur la paroi chauffante 36. Le col 16 et la collerette 18 de la préforme 10 sont situés sous le déflecteur 62.

Le ventilateur 54 de la soufflerie 52 souffle un flux d'air dans la conduite de sortie 60 en direction de la seconde paroi 42. Une partir du flux d'air est dévié par le déflecteur 62, de façon laminaire, en direction du col 16 et de la collerette 18.

Ainsi, le fait de dévier l'air vers le col 16 et vers la collerette 18 de façon laminaire permet de conserver un écoulement du flux d'air rapide et efficace pour chasser l'air chaud qui descend du tunnel supérieur à travers l'ouverture inférieure 41 du four 22. Le refroidissement du col 16 et de la collerette 18 est donc amélioré grâce au déflecteur 62 selon l'invention.

Selon un autre avantage de l'invention, la présence du déflecteur 62, dont l'extrémité amont 64 est profilée de façon aérodynamique, améliore de façon considérable l'efficacité du refroidissement du col 16 de la préforme 10 lors de l'opération de chauffage, que la préforme 10 soit orientée col 16 en bas, comme représenté aux figures, ou col 16 en haut.

Selon une variante non représentée de l'invention, dans le cas d'un four destiné à réchauffer des préformes 10 disposées col 16 vers le haut, l'orientation verticale V des figures 2 et 3 a une direction opposée à celle représentée. Ainsi, le déflecteur 62 est alors agencé au-dessous du col 16 et de la collerette 18, les mandrins 32 sont disposés verticalement sous le rail 34 qui s'étend alors au-dessus du tunnel 24. L'ouverture 41 est.alors une ouverture supérieure du tunnel 24.

Selon une variante non représentée, et de façon connue, le four peut comporter une pluralité de modules qui comportent chacun une portion de tunnel, un dispositif de chauffage et une soufflerie comme décrits précédemment. Ces modules sont alignés les uns à la suite des autres de façon à former un tunnel unique de chauffage 24 composé des portions de tunnel de chacun des modules. Dans cette configuration, le four comporte un dispositif de transport 30 unique. Le déflecteur 62 peut être formé de plusieurs tronçons de déflecteur ou d'une pièce unique dimensionnée à la longueur totale du tunnel 24.

## Revendications

1. Module de chauffage (22) pour une préforme (10), notamment pour une préforme de récipient en plastique, qui comporte un tunnel (24) longitudinal de chauffage qui est délimité transversalement par les faces internes (36, 38) verticales longitudinales parallèles entre elles de deux parois (40, 42), une première paroi chauffante (40) étant équipée d'un système de chauffage (46), l'autre paroi aérée (42) comportant des orifices d'aération (50) destinés à laisser passer transversalement l'air soufflé par au moins une soufflerie (52) depuis l'amont, à l'extérieur du tunnel de chauffage (24), vers l'aval, à l'intérieur, et dans lequel une première partie (12, 14) de la préforme (10) est chauffée dans le tunnel de chauffage (24), tandis que la seconde partie (16) de la préforme (10) est maintenue à l'extérieur du tunnel de chauffage (24) à travers une ouverture (41) longitudinale ménagée entre les bords longitudinaux des parois (36, 38) du tunnel de chauffage (24), du type dans lequel la soufflerie (52) comporte un déflecteur (62) longitudinal qui dévie une partie de l'air soufflé transversalement vers la seconde partie (16) de la préforme (10) afin d'éviter que la matière constitutive de ladite partie inférieure (16) ne s'échauffe jusqu'à sa température d'amollissement,
**caractérisé en ce que** le déflecteur (62) est profilé de façon que l'extrémité amont (64) présente une pointe dirigée vers l'amont, l'épaisseur du déflecteur (62) croissant vers l'aval jusqu'à une partie centrale et son épaisseur diminuant progressivement jusqu'à son extrémité aval (66) en forme de pointe orientée vers l'aval de manière que l'air dévié s'écoule de façon laminaire est accélérée le long d'une face bombée du déflecteur (62) qui s'étend depuis la pointe amont jusqu'à la pointe aval.

2. Module (22) selon la revendication précédente, **caractérisé en ce que** le déflecteur (62) est un écran thermique qui empêche la communication de la chaleur produite par le système de chauffage (46) à la seconde partie (16) de la préforme (10), à travers l'ouverture (41) du tunnel de chauffage (24).

3. Module (22) selon la revendication précédente, **caractérisé en ce que** le déflecteur (62) comporte un système de climatisation (68).

4. Module (22) selon l'une quelconque des revendications précédentes, **caractérisé en ce que** l'extrémité aval (64) du déflecteur (62) est montée pivotante autour d'un axe longitudinal afin de réguler le flux d'air qui soufflé vers la paroi aérée (42).

5. Module (22) selon l'une quelconque des revendication précédentes, **caractérisé en ce que** l'ouverture (41) est ménagé entre les bords longitudinaux inférieurs des parois (36, 38) du tunnel de chauffage (24), et **en ce que** la soufflerie (52) comporte un volet inférieur (70) de sortie d'air qui est agencé sous le déflecteur (62) et dont l'extrémité amont (72) est montée pivotante autour d'un axe longitudinal (C) de façon à guider l'air jusqu'à la seconde partie (16) de la préforme (10), au-dessous de l'ouverture (41) longitudinale ménagée entre les bords longitudinaux inférieurs des parois (36, 38) du tunnel de chauffage (24).

6. Module (22) selon l'une quelconque des revendications précédentes, **caractérisé en ce que** l'ouverture (41) est ménagé entre les bords longitudinaux supérieurs des parois (36, 38) du tunnel de chauffage (24), et **en ce que** la soufflerie (52) comporte un volet supérieur (70) de sortie d'air qui est agencé au-dessus du déflecteur (62) et dont l'extrémité amont (72) est montée pivotante autour d'un axe longitudinal (C) de façon à guider l'air jusqu'à la seconde partie (16) de la préforme (10), au-dessus de l'ouverture (41) longitudinale ménagée entre les bords longitudinaux supérieurs des parois (36, 38) du tunnel de chauffage (24).

7. Four de chauffage pour une préforme (10) qui comporte une pluralité de modules de chauffage (22) selon l'une quelconque des revendications 1 à 6 qui sont alignés de façon à former un tunnel (24).

## Claims

1. Module (22) for heating a preform (10), especially a plastic container preform, which comprises a longitudinal heating tunnel (24) bounded transversely by the mutually parallel longitudinal vertical internal faces (36, 38) of two walls (40, 42), one a heating wall (40) being equipped with a heating system (46), and the other an aerated wall (42) having aeration orifices (50) that are intended to let the air blown by at least one blower (52) pass through them transversely from the upstream, outside the heating tunnel (24), to the downstream, inside the latter, and in which module a first portion (12, 14) of the preform (10) is heated in the heating tunnel (24), while a second portion (16) of the preform (10) is held outside the heating tunnel (24) through a longitudinal opening (41) made between the longitudinal edges of the walls (36, 38) of the heating tunnel (24), of the type in which the blower (52) includes a longitudinal deflector (62) that deflects a portion of the air blown transversely towards the second portion (16) of the preform (10) so as to prevent the constituent material of said lower portion (16) from being heated up to its softening point,
**characterized in that** the deflector (62) is profiled so that the upstream end (64) has a point directed upstream, the thickness of the deflector (62) increasing towards the downstream until a central part and its thickness progressively decreasing as far as its downstream end (66) which forms a point directed downstream so that the deflected air flows in a laminar and accelerated manner along a curved face of the deflector (62) which extends from the upstream point to the downstream point.

2. Module (22) according to the preceding claim,
**characterized in that** the deflector (62) is a heat shield that prevents heat produced by the heating system (46) from communicating with the second portion (16) of the preform (10) through the opening (41) in the heating tunnel (24).

3. Module (22) according to the preceding claim,
**characterized in that** the deflector (62) includes an air-conditioning system (68).

4. Module (22) according to any one of the preceding claims, **characterized in that** the downstream end (64) of the deflector (62) is mounted so as to pivot about a longitudinal axis so as to regulate the flow of air blown towards the aerated wall (42).

5. Module (22) according to any one of the preceding claims, **characterized in that** the opening (41) is made between the lower longitudinal edges of the walls (36, 38) of the heating tunnel (24) and **in that** the blower (52) includes a lower air outlet flap (70) which is placed beneath the deflector (62) and the upstream end (72) of which is mounted so as to pivot about a longitudinal axis (C) so as to guide the air right to the second portion (16) of the preform (10), below the longitudinal opening (41) made between the lower longitudinal edges of the walls (36, 38) of the heating tunnel (24).

6. Module (22) according to any one of the preceding claims, **characterized in that** the opening (41) is made between the upper longitudinal edges of the walls (36, 38) of the heating tunnel (24)? and **in that** the blower (52) includes an upper air outlet flap (70) which is placed above the deflector (62) and the upstream end (72) of which is mounted so as to pivot about a longitudinal axis (C) so as to guide the air right to the second portion (16) of the preform (10), above the longitudinal opening (41) made between the upper longitudinal edges of the walls (36, 38) of the heating tunnel (24).

7. Oven for heating a preform (10), which includes a plurality of heating modules (22) according to any one of Claims 1 to 6 that are aligned so as to form a tunnel (24).

## Patentansprüche

1. Erwärmungsmodul (22) für eine Vorform, insbesondere eine Vorform für einen Kunststoffbehälter, die einen längsverlaufenden Erwärmungskanal (24) aufweist, der quer durch vertikale Innenseiten (36, 38) zweier längsverlaufender, parallel zueinander stehender Wände (40 42) begrenzt wird, wobei eine erste Heizwand (40) mit einem Heizsystem (46) ausgestattet ist, und die andere belüftete Wand (42) Lüftungsöffnungen (50) aufweist, durch die die Zuluft quer durch mindestens ein vorgelagertes Gebläse (52) außen am Erwärmungskanal (24) nach innen hinten hindurchgehen kann, und bei dem ein erster Teil (12, 14) der Vorform (10) in dem Erwärmungskanal (24) erwärmt wird, während der zweite Teil (16) der Vorform (10) über eine Längsöffnung (41), die sich zwischen den Längskanten der Wände (36, 38) des Erwärmungskanals (24) befindet, außen am Erwärmungskanal (24) gehalten wird, wobei das Gebläse (52) eine längsverlaufende Leitplatte (62) besitzt, die einen Teil der Gebläseluft quer zum zweiten Teil (16) der Vorform (10) hin verlagert, um zu verhindern, dass der Werkstoff, aus dem der untere Teil (16) besteht, nicht bis zur Erweichungstemperatur erhitzt wird,
**dadurch gekennzeichnet, dass** die Leitplatte (62) derart profiliert ist, dass das vorgelagerte Ende (64) eine nach vorn gerichtete Spitze aufweist, wobei die Stärke der Leitplatte (62) nach hinten bis zu einem mittleren Abschnitt zunimmt, und bis zum hinteren Ende (66) immer mehr abnimmt, und die Form einer nach hinten gerichteten Spitze annimmt, so dass die verlagerte Luft laminar und beschleunigt entlang einer konvexen Fläche der Leitplatte (62) fließt, die sich von der vorderen Spitze bis zu der hinteren Spitze erstreckt.

2. Modul (22) nach dem vorhergehenden Anspruch, **dadurch gekennzeichnet, dass** die Leitplatte (62) ein Wärmeschutzschild ist, die eine Verbindung der von dem Heizsystem (46) erzeugten Hitze mit dem zweiten Teil (16) der Vorform (10) über die Öffnung (41) des Erwärmungskanals (24) verhindert.

3. Modul (22) nach dem vorhergehenden Anspruch, **dadurch gekennzeichnet, dass** die Leitplatte (62) eine Klimaanlage (68) besitzt.

4. Modul (22) nach einem der vorhergehenden Ansprüche, **dadurch gekennzeichnet, dass** das vordere Ende (64) der Leitplatte (62) um eine Längsachse herum drehbar montiert ist, um den Luftstrom, der in Richtung der belüfteten Wand (42) geblasen wird, zu regulieren.

5. Modul (22) nach einem der vorhergehenden Ansprüche, **dadurch gekennzeichnet, dass** die Öffnung (41) zwischen den unteren Längskanten der Wände (36, 38) des Erwärmungskanals (24) angeordnet ist, und dass das Gebläse (52) eine untere Klappe (70) für den Luftaustritt besitzt, die unter der Leitplatte (62) angeordnet ist, und dessen vorderes Ende (72) um eine Längsachse (C) herum drehbar montiert ist, um die Luft unterhalb der Längsöffnung (41), die zwischen den unteren Längskanten der Wände (36, 38) des Erwärmungskanals (24) angeordnet ist, bis zu dem zweiten Teil (16) der Vorform (10) zu führen.

6. Modul (22) nach einem der vorhergehenden Ansprüche, **dadurch gekennzeichnet, dass** die Öffnung (41) zwischen den oberen Längskanten der Wände (36, 38) des Erwärmungskanals (24) angeordnet ist, und dass das Gebläse (52) eine obere Klappe (70) für den Luftaustritt besitzt, die über der Leitplatte (62) angeordnet ist, und dessen vorderes Ende (72) um eine Längsachse (C) herum drehbar montiert ist, um die Luft oberhalb der Längsöffnung (41), die zwischen den oberen Längskanten der Wände (36, 38) des Erwärmungskanals (24) angeordnet ist, bis zu dem zweiten Teil (16) der Vorform (10) zu führen.

7. Erwärmungsofen für eine Vorform (10), der eine Vielzahl von Erwärmungsmodulen (22) nach einem der Ansprüche 1 bis 6 besitzt, die derart angeordnet sind, dass sie einen Kanal (24) bilden.
